# EUROPÄISCHE PATENTSCHRIFT

(11) **EP 3 950 274 B1**
(45) Veröffentlichungstag und Bekanntmachung des Hinweises auf die Patenterteilung: **01.05.2024**
(21) Anmeldenummer: 21185894.9
(22) Anmeldetag: 15.07.2021
(51) Int. Cl.: B29C 64/106, B29C 64/112, B33Y 10/00, B33Y 80/00

(54) **VERFAHREN ZUR HERSTELLUNG EINES GEHÄUSES EINER ENERGIESAMMELVORRICHTUNG**
METHOD FOR PRODUCING AN ENERGY COLLECTION DEVICE HOUSING
PROCÉDÉ DE FABRICATION D'UN LOGEMENT D'UN DISPOSITIF DE COLLECTE D'ENERGIE

(30) Priorität: 06.08.2020 DE 102020209967
(43) Veröffentlichungstag der Anmeldung: 09.02.2022
(73) Patentinhaber: Robert Bosch GmbH, 70442 Stuttgart (DE)
(72) Erfinder: Lamprecht, Lukas, 76547 Sinzheim (DE); Schmidt, Kaja, 70195 Stuttgart (DE)

(56) Entgegenhaltungen:
- DE-A1-102017 202 000
- US-A1- 2019 110 366

## Beschreibung

### Technisches Gebiet

Die Erfindung bezieht sich auf ein Verfahren zur Herstellung eines Gehäuses einer Energiesammelvorrichtung mittels eines additiven Fertigungsverfahrens, wie beispielsweise des 3D-Druckverfahrens, insbesondere des 3D-Dispensens. Des Weiteren bezieht sich die Erfindung auf die Verwendung des Verfahrens zur Herstellung von Gehäusen, beispielsweise für energieautarke Sensorsysteme.

### Stand der Technik

EP 2 078 312 B1 hat eine mittels Print-Forming-Verfahren hergestellte Energiesammelvorrichtung zum Gegenstand. Die Vorrichtung umfasst ein Gehäuse, das einen Bodenabschnitt mit einem Randwandabschnitt umfasst, die integral ausgebildet sind, indem ein Rand im Umfang des Bodenabschnitts aufgebaut wird, wobei der Bodenabschnitt ein oder mehrere Löcher umfasst, um das Abfließen von Opfermaterial während eines Print-Forming-Prozesses zu ermöglichen, der während der Herstellung der Vorrichtung verwendet wird. Des Weiteren ist ein piezoelektrisch freitragender Balken vorgesehen, der integral als Teil des Randwandabschnitts ausgebildet ist und über einen Bereich des Bodenabschnitts hinausragt, wobei der piezoelektrische freitragende Balken eine erste Elektrodenschicht, eine Keramikschicht, die auf der ersten Elektrodenschicht angeordnet ist, und eine zweite Elektrodenschicht aufweist, die auf der Keramikschicht angeordnet ist. Es ist ein erster Durchgang vorgesehen, der innerhalb des Randwandabschnitts ausgebildet ist und mit der ersten Elektrodenschicht gekoppelt ist. Des Weiteren ist ein zweiter Durchgangvorgesehen, der innerhalb des Randwandabschnitts ausgebildet ist und mit der zweiten Elektrodenschicht gekoppelt ist. Eine Zusatzmasse ist an dem piezoelektrischen freitragenden Balken angebracht. Ein Hohlraum trennt den freitragenden Balken von dem Bodenabschnitt, wobei der Hohlraum dafür eingerichtet ist, es mindestens einem Ende des freitragenden Balkens zu ermöglichen, sich vertikal relativ zum Bodenabschnitt in Reaktion auf eine sich bewegende Vorrichtung zu bewegen, wobei der Hohlraum entsteht, wenn während des Print-Forming-Prozesses Opfermaterial durch die Löcher abfließt. Es ist ein Deckel vorgesehen, der auf einem oberen Bereich des Randwandabschnitts des Gehäuses angeordnet ist, um den piezoelektrisch freitragenden Balken innerhalb des Hohlraums abzudichten. Eine erste Oberflächenmontageinsel ist auf einer Fläche des Deckels mit dem ersten Durchganggekoppelt, eine zweite Oberflächenmontageinsel auf der Fläche des Deckels ist mit dem zweiten Durchgang gekoppelt.

US 2018/120912 A1 bezieht sich auf ein Herstellungsverfahren einer Wärmemanagementvorrichtung einschließlich ihres Gehäuses, das hauptsächlich auf einem additiven Fertigungsverfahren basiert.

US 2014/333011 A1 hat ein additives Fertigungsverfahren zum Gegenstand, bei dem eine Wandstruktur auf einem Druckbett hergestellt wird. Ein Trägerstück mit einer antihaftbeschichteten Oberfläche wird in der Nähe oder innerhalb der Struktur platziert, eine Materialschicht wird auf einer oder mehreren Wänden und auf dem Trägerstück additiv gefertigt, um einen Überstand zu erzeugen und das Trägerstück, nachdem das den Überstand bildende Material in einen festen Zustand zurückgekehrt oder gehärtet ist, wieder entfernt wird.

WO 2019/147 700 A1 hat ein additives Fertigungsverfahren zum Gegenstand. US 2019/0110366 A1 betrifft ein Verfahren zum Herstellen eines Komponententrägers, wobei zumindest ein Teil des Komponententrägers als dreidimensionale Struktur ausgebildet ist.

### Darstellung der Erfindung

Erfindungsgemäß wird ein Verfahren zur Herstellung eines Gehäuses einer Energiesammelvorrichtung mittels additiver Fertigung, insbesondere mittels 3D-Dispensens mit zumindest nachfolgenden Verfahrensschritten vorgeschlagen:
a) Herstellung eines additiven Schichtaufbaus des Gehäuses in eine Raumrichtung,
b) Erzeugung von Einspannbereichen für Energiesammelstrukturen, Biegebalken, Kammstrukturen mit mindestens einer Zusatzmasse, Trennebenen und mindestens einer Leiterplatte durch additiven Schichtaufbau während der Durchführung von Verfahrensschritt a),
c) stoffschlüssiges Fügen der in Verfahrensschritt b) genannten Komponenten in den Einspannbereichen durch Anordnung der Komponenten zwischen UV-vorvernetzten und durch additiven Schichtaufbau hergestellten Ebenen und Nassschichten im Schichtaufbau.

In vorteilhafter Weise kann durch die erfindungsgemäß vorgeschlagene Lösung ein Gehäuse einer Energiesammelvorrichtung durch additive Herstellung bereitgestellt werden, welches einen hohen Funktionalisierungsgrad aufweist. Der hohe Funktionalisierungsgrad kann insbesondere durch ein kunststoffbasiertes Extrusionsverfahren herbeigeführt werden, wobei die Funktionalisierung in einem Fertigungsprozess erreicht werden kann.

In vorteilhafter Weise kann durch das erfindungsgemäß vorgeschlagene Verfahren ein Material, insbesondere als Aufbaumaterial, als kationisch polymerisierbares Expoxidharz eingesetzt werden. Mittels dieses Materials lassen sich die Materialeigenschaften des erhaltenen Gehäuses gezielt einstellen, so dass mehrere Funktionen durch das Gehäuse übernommen werden können. Zu diesen sind beispielsweise die Bereitstellung einer tragenden Struktur mit definierter Steifigkeit und Dämpfung zu zählen, ferner die Gewährleistung einer Einspannung beziehungsweise Klemmung einer Kammstruktur mittels beispielsweise einer formschlüssigen Verbindung sowie eine thermische Isolation der Energiesammel- und Elektronikebenen.

In Weiterbildung des erfindungsgemäß vorgeschlagenen Verfahrens wird das Aufbaumaterial als dual vernetztes, insbesondere durch eine UV-Strahlungsquelle chemisch vorvernetzbares Material dargestellt.

In vorteilhafter Weiterbildung des erfindungsgemäß vorgeschlagenen Verfahrens wird nach Aufbau des gesamten, mittels additiver Fertigungsverfahren hergestellten Gehäuses eine thermische Gesamtvernetzung durchgeführt, so dass insbesondere die Komponenten eines mehrteiligen Gehäuses eine Gesamtvernetzung erfahren und somit eine mechanische Stabilität einerseits sowie eine Kapselung gegen Umwelteinflüsse andererseits gewährleistet werden kann.

Beim erfindungsgemäß vorgeschlagenen Verfahren weist das im additiven Schichtaufbau gefertigte Gehäuse eine definierte Steifigkeit sowie eine definierte Dämpfung auf und ist in tragender Strukturbauweise ausgeführt.

Durch die Herstellung von Einspannbereichen während der Fertigung wird eine Einspannung oder Klemmung beispielsweise von Kammstrukturen, die mindestens eine Zusatzmasse aufweisen, sichergestellt.

Beim erfindungsgemäß vorgeschlagenen Verfahren ist innerhalb des Gehäuses eine thermische Isolation der Kammstrukturen und/oder der Leiterplatte und deren Elektronikkomponenten gewährleistet.

In vorteilhafter Weiterbildung des erfindungsgemäß vorgeschlagenen Verfahrens wird gemäß Verfahrensschritt c) eine stoffschlüssige Verbindung durch Verklebung der Kammstrukturen mit den UV-vernetzten Ebenen mit unvernetztem Dispensermaterial, insbesondere Nassschichten, erzeugt.

Der durch das erfindungsgemäß vorgeschlagene Verfahren geschaffene additive Schichtaufbau wird während der Herstellung des Gehäuses, insbesondere im Bodenbereich desselben, mit Montagehilfen versehen, die zur Fixierung einzulegender Konstruktionen und/oder Leiterplatten dienen. Bei den Montagehilfen handelt es sich um Abstützungen, damit zum Beispiel Biegebalken nicht in einen darunterliegenden Hohlraum abknicken.

In vorteilhafter Weiterbildung der erfindungsgemäß vorgeschlagenen Lösung werden innerhalb der Einspannbereiche Klebstoffwannen erzeugt, die eine insbesondere Kerbspannungsspitzen herabsetzende Geometrie aufweisen. Durch eine derartige Geometrie von Klebstoffwannen lassen sich mechanische Lastspitzen, die durch das Gehäuse aufzunehmen wären, signifikant herabsetzen, so dass eine hohe Lebensdauer erreicht werden kann.

Des Weiteren bezieht sich die Erfindung auf die Verwendung des Verfahrens zur Herstellung von Gehäusen für energieautarke Sensorsysteme.

### Vorteile der Erfindung

Durch die erfindungsgemäß vorgeschlagene Lösung kann eine Gehäuseherstellung eines Gehäuses bereitgestellt werden, wobei während der Fertigung des Gehäuses bevorzugt im additiven Fertigungsverfahren, insbesondere 3D-Dispensen, eine Funktionsintegration erzielbar ist. Kammstrukturen mit Zusatzmassen sowie eine ein Leistungsmanagement ermöglichende, mit Elektronikkomponenten bestückte Leiterplatte können in einem Fertigungsprozess zwischen den einzelnen Druckabschnitten des 3D-Dispensens in das Gehäuse während dessen Aufbau in einer Raumrichtung eingebettet und fixiert werden.

Wird beispielsweise als Aufbaumaterial ein Material wie kationisch polymerisierbares Epoxidharz eingesetzt, so lassen sich die Materialeigenschaften des erfindungsgemäß hergestellten Gehäuses gezielt einstellen. Damit können durch das hergestellte Gehäuse mehrere Funktionen übernommen werden, wozu die Bereitstellung einer tragenden Struktur mit einer definierten Steifigkeit und einem vorgegebenen definierten Dämpfungsverhalten zu zählen ist. Des Weiteren ist das erfindungsgemäß vorgeschlagene Gehäuse so beschaffen, dass eine Einspannung oder Klemmung der Kammstrukturen beispielsweise mittels einer formschlüssigen Verbindung innerhalb des Gehäuses gewährleistet bleibt.

Darüber hinaus kann durch das erfindungsgemäß vorgeschlagene Fertigungsverfahren eine thermische Isolation einer Energiesammelebene sowie einer Leiterplattenebene erreicht werden. In besonders vorteilhafter Weise kann bei der Anwendung des erfindungsgemäß vorgeschlagenen Verfahrens das Aufbaumaterial durch unvollständige chemische Vernetzung als Klebstoff benutzt werden. Es lassen sich stoffschlüssige Verbindungen durch Verklebung der Kammstrukturen mit dem bedruckten Gehäuse mit nicht vorvernetztem Dispensmaterial darstellen. Daraus resultiert der Vorteil, dass eine Entlastung des Einspannbereichs durch Minimierung der Kerbspannung direkt durch den additiven Aufbau ohne aufwändige Gestaltung der Einspannvorrichtung beziehungsweise aufwändige Planung von Kraftverläufen erfolgt.

Durch die erfindungsgemäß vorgeschlagene Lösung lässt sich des Weiteren aufgrund flexibler Adaption des Gehäuses an verschiedene mechanische Schnittstellen eine relativ hohe Produktvarianz erreichen. Als Beispiele seien hier Tannenbaumklipps, Inserts, Bohrungen und dergleichen genannt. Durch die Anwendung des 3D-Dispensens lassen sich die Vorteile dieser additiven Fertigungstechnik, d. h. eine schnelle Änderung der Geometrie ohne aufwändige Werkzeuganpassung in signifikanter Weise nutzen.

Durch im Bodenbereich des additiv gefertigten Gehäuses ausgebildete Montagehilfen sowie die ersten Lagen der Wand- beziehungsweise Einspannbereiche für die zu bestückenden Komponenten werden gleichzeitig Montagehilfen für die dann einzulegende unterste Energiesammelebene bereitgestellt. Beim erfindungsgemäß vorgeschlagenen Verfahren können in vorteilhafter Weise separate Positionierhilfen entfallen.

### Kurze Beschreibung der Zeichnungen

Ausführungsformen der Erfindung werden anhand der Zeichnungen und der nachfolgenden Beschreibung näher erläutert.

Es zeigen:
- Figuren 1.1 - 1.5: ein Prozessschema der additiven Fertigung,
- Figur 2: eine Energiesammelvorrichtung mit schalenartigem Gehäuse mit Energiesammelstrukturen und Leiterplatte,
- Figur 3.1: die Darstellung eines Einspannbereichs in einer Z-X-Ebene,
- Figur 3.2: die Darstellung eines Einspannbereichs ebenfalls in Z-X-Ebene,
- Figur 3.3: eine Ausgestaltung einer Klebstoffwanne zur Kerbspannungsentlastung,
- Figur 4: einen Querschnitt durch eine erfindungsgemäße Energiesammelvorrichtung,
- Figur 5, 5.1: und 5.2 eine additiv gefertigte erfindungsgemäße Energiesammelvorrichtung.

### Ausführungsformen der Erfindung

Der Darstellung gemäß der Figurensequenz 1.1 bis 1.5 ist eine Prozessdarstellung des 3D-Dispensens zu entnehmen.

Ein dreidimensionales Modell wird zur Vorbereitung einer 3D-Dispens-Fertigung in einzelne quasi zweidimensionale Schichten aufgeteilt. Ein erstes aufgebautes Objekt 10 wird mittels 3D-Dispensen additiv Einzelschicht 12 für Einzelschicht 12 aufgebaut. Die Einzelschichten 12 werden entsprechend ihrer Geometrie durch einen Dispenserkopf abgefahren und mit entsprechendem Aufbaumaterial ausgefüllt. Nachdem eine Einzelschicht 12 aufgebaut ist, wird diese über eine UV-Strahlungsquelle 14 chemisch vorvernetzt.

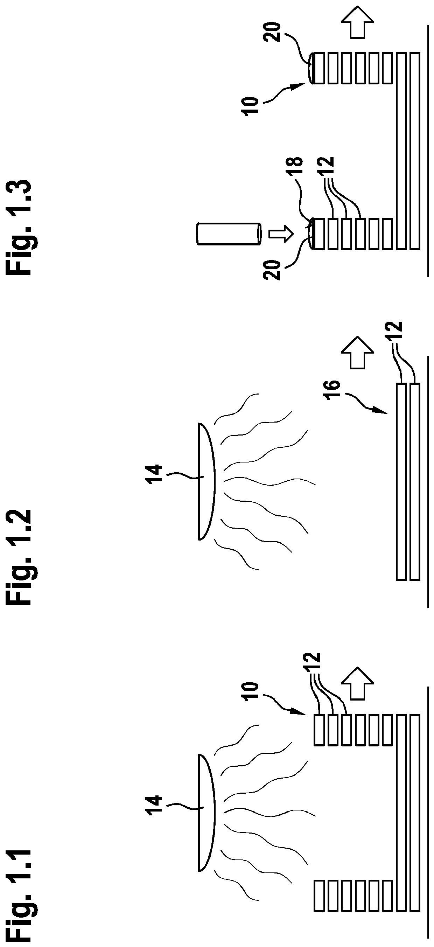

Figur 1.2 zeigt ein zweites aufgebautes Objekt 16, welches durch Einzelschichten 12 in vertikaler Richtung aufgebaut wird, wobei eine jede Einzelschicht 12 über eine UV-Strahlungsquelle 14 zur chemischen Vorvernetzung bestrahlt wird.

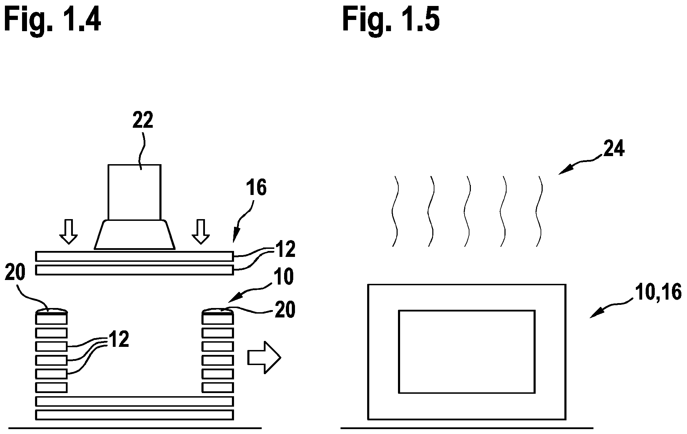

Um Hohlräume ausbilden zu können, können auch zwei- oder mehrteilige Strukturen aufgebaut werden. Figur 1.3 zeigt beispielsweise ein kastenförmig ausgebildetes erstes aufgebautes Objekt 10, welches aus Einzelschichten 12 aufgebaut wird. Entsprechend der Länge der Einzelschichten 12 ergibt sich ein Hohlraum. An einer Kontaktfläche 18 wird eine Nassschicht 20 aus Aufbaumaterial aufgebracht. Anschließend wird, wie in Figur 1.4 dargestellt ist, ein zweites aufgebautes Objekt 16 auf die mit der Nassschicht 20 beschichteten Kontaktflächen 18 aufgebracht. Dabei wird das zweite aufgebaute Objekt 16 von einem Förderwerkzeug 22 ergriffen und auf die Kontaktflächen 18 aufgebracht.

Schließlich erfolgt in Figur 1.5 ein Aushärtevorgang 24, bei dem eine chemische Vollvernetzung sämtlicher Einzelschichten 12 des miteinander gefügten ersten aufgebauten Objekts 10 und des zweiten aufgebauten Objekts 16 bewirkt wird.

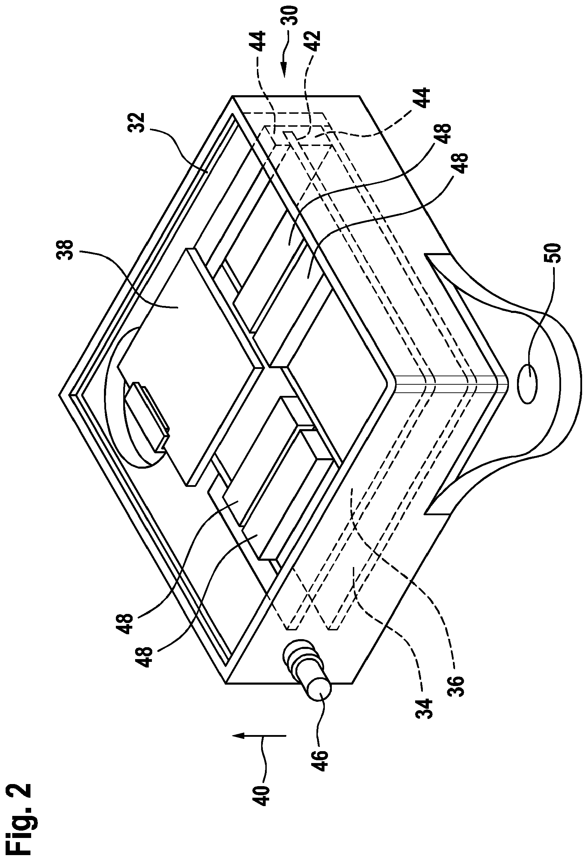

Figur 2 zeigt eine isometrische Ansicht eines schalenartigen Gehäuses eines Energiesammlers. Bei diesem Energiesammler wird ein Gehäuse 30, das eine Profilnut 32 umfassen kann, mit einer ersten Lage 34, einer darüber liegenden zweiten Lage 36 sowie einer dritten Lage 38 in Z-Richtung 40 gesehen befüllt. Über einzelne Abstandhalter 44 wird eine Einspannung 42 der jeweiligen Lagen 34, 36, 38 vorgenommen. Die Wand des Gehäuses 30 gemäß der Darstellung in Figur 2 ist mit einem Normstecker 46 versehen. Der Normstecker 46 stellt einen additiv erzeugten Durchbruch beziehungsweise eine Öffnung im Gehäuse 30 dar, was eine potenzielle Schwachstelle für die Wand des Gehäuses 30 bildet. Wie aus der isometrischen Ansicht gemäß Figur 2 des Weiteren hervorgeht, sind die erste Lage 34 sowie die zweite Lage 36 jeweils mit einer Anzahl von Zusatzmassen 48 versehen. Am Gehäuse 30 befindet sich des Weiteren eine Montagemöglichkeit 50 an einer Vibrationsquelle.

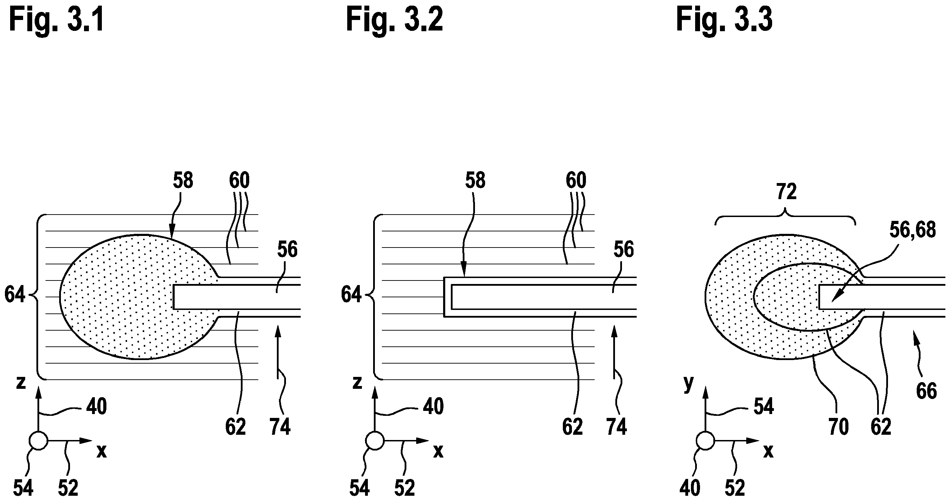

Der Figurensequenz der Figuren 3.1, 3.2 und 3.3 sind verschiedene Varianten von Einspannbereichen 58 zu entnehmen, mittels derer einzelne Sammelstrukturen 56 in einem Gehäuse 30, welches durch einen additiven Schichtaufbau 64 in Z-Richtung 40 beispielsweise aufgebaut wird, enthalten. Aus Figur 3.1 geht beispielsweise hervor, dass im dort dargestellten Einspannbereich 58 des additiven Schichtaufbaus 64 zwischen UV-vorvernetzten Ebenen 60 eine Sammelstruktur 56 fixiert ist. Bei der Sammelstruktur 56 handelt es sich beispielsweise um einen Biegebalken 68 oder dergleichen. Wie aus dem Koordinatensystem gemäß Figur 3.1 zu entnehmen ist, erfolgt der additive Schichtaufbau 64 in Z-Richtung (vgl. Position 40). Senkrecht dazu erstreckt sich eine X-Richtung 52. Aus der Zeichenebene gemäß der Figur 3.1 ragt eine Y-Richtung 54 hervor.

Innerhalb des Einspannbereichs 58 gemäß der Darstellung in Figur 3.1 wird das Ende der Sammelstruktur 56, die von einer Nassschicht 62 aus nicht vernetztem Aufbaumaterial gebildet ist, im Einspannbereich 58 eingegossen und fixiert. Im Ausführungsbeispiel des Einspannbereichs 58 gemäß Figur 3.1 erfolgt der additive Schichtaufbau 64 in Z-Richtung 40 in Balkendickenrichtung 74, die mit der Z-Richtung 40 zusammenfällt.

Aus der Darstellung gemäß Figur 3.2 geht hervor, dass dort ebenfalls in Z-Richtung 40, die mit der Balkenbiegerichtung 74 zusammenfällt, ein additiver Schichtaufbau 64 vorliegt. Innerhalb des additiven Schichtaufbaus 64 werden UV-vorvernetzte Ebenen 60 aufgebaut, die einen Einspannbereich 58 begrenzen, in dem das Ende der beispielsweise als Biegebalken 68 ausgebildeten Sammelstruktur 56 eingespannt wird. Diese ist von einer Nassschicht 62 aus nicht vernetztem Aufbaumaterial umgeben.

Gemäß den Ausführungsvarianten der Figuren 3.1 und 3.2 erfolgt der additive Schichtaufbau 64 in Balkenbiegerichtung 74, d. h. in Z-Richtung 40.

Figur 3.3 zeigt eine Hochkantlage 66 einer Sammelstruktur 56. Ein Ende derselben ist in einer Klebstoffwanne 70 aufgenommen, die mit nicht vernetztem Aufbaumaterial befüllt ist. Die Klebstoffwanne 70 ist derart konfiguriert, dass sich eine Kerbspannungsentlastung 72 einstellt, was eine vorteilhafte Entspannung beispielsweise des Biegebalkens 68 ermöglicht. Aus der Darstellung gemäß Figur 3.3 geht hervor, dass die Klebstoffwanne 70 in der X-Y-Ebene liegt, die durch die X-Richtung 52 sowie die Y-Richtung 54 begrenzt ist. Senkrecht zu der Zeichenebene gemäß der Figur 3.3 erstreckt sich die Z-Richtung 40 aus der Zeichenebene der Figur 3.3.

In Bezug auf Figur 3.3 sei angemerkt, dass dort das in der Klebstoffwanne 70 bevorratete Aufbaumaterial vollständig vernetzt ist und daher als Klebstoff benutzt werden kann. Eine stoffschlüssige Verbindung kann durch Verkleben des Biegebalkens 68 mit dem bereits aufgebauten Gehäuse 30 mit nicht vorvernetztem Aufbaumaterial erreicht werden. Dadurch kann in vorteilhafter Weise eine Entlastung des Einspannbereichs 58 durch Minimierung der Kerbspannung direkt durch den additiven Schichtaufbau 64 ohne aufwändige Gestaltung der Einspannvorrichtung beziehungsweise deren Kraftverläufe geschaffen werden.

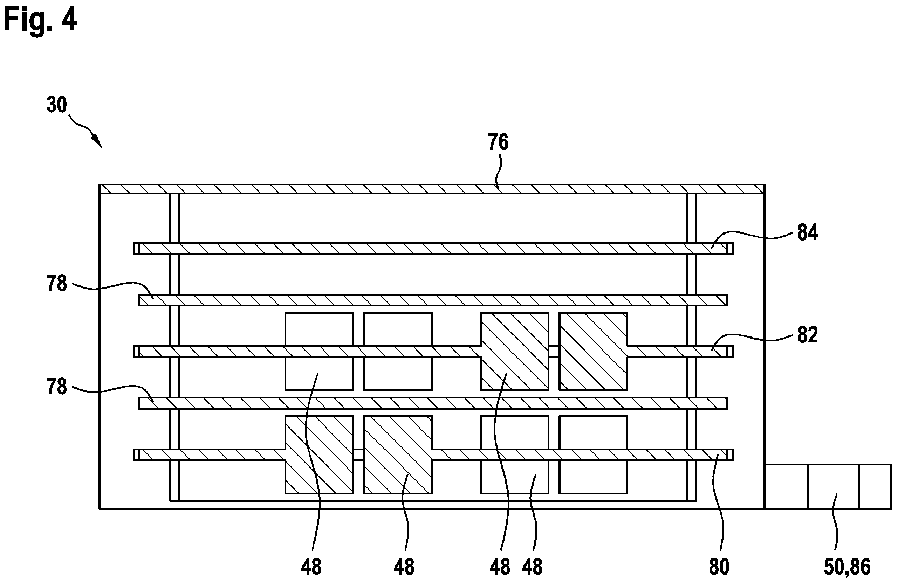

Der Darstellung gemäß Figur 4 ist ein Gehäuse 30 eines erfindungsgemäß vorgeschlagenen Energiesammlers 28 (Harvester) zu entnehmen. Aus Figur 4 geht hervor, dass das Gehäuse 30 ausgehend von dessen Bodenbereich, in dem die Montagevorrichtung 86 liegt, mehrere Ebenen enthält. Zuunterst liegt eine erste Kammstruktur 80, die an ihrer Ober- und Unterseite jeweils mit Zusatzmassen 48 versehen ist. Oberhalb der ersten Kammstruktur 80 verläuft eine Trennebene 78, über der sich - parallel zur ersten Kammstruktur 80 - eine zweite Kammstruktur 82 erstreckt. Auch die zweite Kammstruktur 82 ist an ihrer Ober- beziehungsweise ihrer Unterseite jeweils mit Zusatzmassen 48 versehen. Oberhalb der zweiten Kammstruktur 82 wiederum verläuft eine Trennebene 78, über der innerhalb des Gehäuses 30 eine Leiterplatte 84, die mit elektronischen Bauelementen an Ober- und/oder Unterseite bestück ist, verläuft. Sämtliche Komponenten, d. h. erste Kammstruktur 80, zweite Kammstruktur 82, Trennebenen 78 sowie die Leiterplatte 84 sind innerhalb des Gehäuses 30 übereinanderliegend aufgebaut und jeweils in die Ränder des Gehäuses 30, die sukzessive in Z-Richtung 40 aus Aufbaumaterial aufgebaut werden, in Einspannbereiche 58 eingespannt oder eingeklemmt, wie sie aus den zuvor beschriebenen Figuren 3.1, 3.2 und 3.3 entnehmbar sind.

Die Trennebenen 78 zwischen den einzelnen Kammstrukturen 80, 82 dienen zur thermischen Isolation.

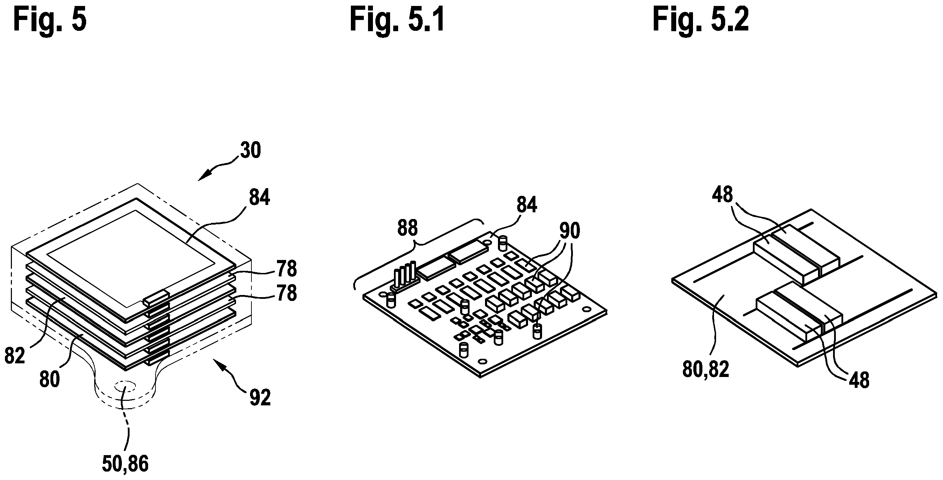

Figuren 5, 5.1 und 5.2 zeigen additiv gefertigte Energiesammlermodule.

Aus Figur 5 lässt sich entnehmen, dass innerhalb des hier im additiven Fertigungsverfahren erzeugten Gehäuses 30 die erste Kammstruktur 80, die Trennebene 78, die zweite Kammstruktur 82, erneut eine Trennebene 78 sowie die Leiterplatte 84 eingelassen sind. Die genannten Komponenten befinden sich in den Wänden des Gehäuses 30 in den Einspannbereichen 58, wie sie analog zu den Darstellungen gemäß den Figuren 3.1, 3.2 und 3.3 gefertigt sind. Seitlich am Gehäuse 30 des Energiesammlers 28 befindet sich eine Montagevorrichtung 86. Über diese wird die Energie in Form von Vibrationen beziehungsweise Schwingungen in das Gehäuse 30 eingetragen und dort über die jeweiligen Kammstrukturen 80 beziehungsweise 82, die an Ober- und/oder Unterseite mit Zusatzmassen 48 bestückt sein können, von mechanischer in elektrische Energie umgewandelt. Aus der Darstellung gemäß Figur 5.1 ergibt sich, dass eine Bestückung 88 der Leiterplatte 84 mit Elektronikkomponenten 90 vorgesehen ist. Der in den Figuren 5, 5.1 und 5.2 dargestellte Aufbau stellt einen 3D-Aufbau, insbesondere einen 3D-Dispenseraufbau dar und erlaubt während der Herstellung des Gehäuses 30 das Eingießen beziehungsweise Befestigen der im Gehäuse 30 anzuordnenden ersten Kammstruktur 80, der zweiten Kammstruktur 82, der Trennebenen 78 sowie der Leiterplatte 84, die mit einer Anzahl von Elektronikkomponenten 90 bestückt sein kann. Die genannten Komponenten sind in der perspektivisch dargestellten Figur 5 im Gehäuse 30 übereinanderliegend angeordnet. Figuren 5.1 und 5.2 stellen jeweils Detaildarstellungen der ersten Kammstruktur 80 und der zweiten Kammstruktur 82 sowie der Leiterplatte 84 dar.

Wenngleich in der Darstellung gemäß Figur 5.2 die Zusatzmassen 48 lediglich auf der Oberseite der ersten Kammstruktur 80 beziehungsweise der zweiten Kammstruktur 82 dargestellt sind, können diese (vgl. Schnittdarstellung gemäß Figur 4) sowohl an der Oberseite oder an der Unterseite oder an Unter- und Oberseite aufgenommen sein. Die Zusatzmassen 48 sind beispielsweise in schlitzförmigen Ausnehmungen mit ihren Enden eingelassen und übereinanderliegend im Gehäuse 30 angeordnet. Figur 5.1 zeigt, dass die dort dargestellte Leiterplatte 84 auf ihrer Oberseite eine Anzahl von Elektronikkomponenten 90 aufnimmt, die dem Leistungsmanagement des Energiesammlers 28 im eingebauten Zustand dienen.

## Patentansprüche

1. Verfahren zur Herstellung eines Gehäuses (30) einer Energiesammelvorrichtung (28) mittels additiver Fertigung, insbesondere mittels 3D-Dispensens mit zumindest nachfolgenden Verfahrensschritten:
a) Herstellung eines Schichtaufbaus (64) des Gehäuses (30) in eine Raumrichtung (40),
b) Erzeugung von Einspannbereichen (58) für Energiesammelstrukturen (56), Biegebalken (68), Kammstrukturen (80, 82) mit mindestens einer Zusatzmasse (48), Trennebenen (78) und mindestens einer Leiterplatte (84) durch additiven Schichtaufbau während der Durchführung von Verfahrensschritt a),
c) stoffschlüssiges Fügen der in Verfahrenschritt b) genannten Komponenten in den Einspannbereichen (58) durch Anordnung der Komponenten zwischen UV-vorvernetzten und durch additiven Schichtaufbau hergestellten Ebenen (60) und Nassschichten (62) im Schichtaufbau (64).

2. Verfahren gemäß Anspruch 1, **dadurch gekennzeichnet, dass** als Aufbaumaterial kationisch polymerisierbare Epoxidharze verarbeitet werden.

3. Verfahren gemäß den Ansprüchen 1 und 2, **dadurch gekennzeichnet, dass** das Aufbaumaterial dual vernetzbar, insbesondere durch eine UV-Strahlungsquelle (14), chemisch vorvernetzt wird.

4. Verfahren gemäß den Ansprüchen 1 bis 3, **dadurch gekennzeichnet, dass** nach Aufbau des gesamten Gehäuses (30) eine thermische Gesamtvernetzung durchgeführt wird.

5. Verfahren gemäß den Ansprüchen 1 bis 4, **dadurch gekennzeichnet, dass** das im additiven Schichtaufbau (64) gefertigte Gehäuse (30) in definierter Steifigkeit und definierter Dämpfung als tragende Struktur ausgeführt wird.

6. Verfahren gemäß den Ansprüchen 1 bis 5, **dadurch gekennzeichnet, dass** im Einspannbereich (58) eine Einspannung oder Klemmung der Kammstrukturen (80, 82) sichergestellt wird.

7. Verfahren gemäß den Ansprüchen 1 bis 6, **dadurch gekennzeichnet, dass** im Gehäuse (30) eine thermische Isolation der Kammstrukturen (80, 82) und/oder der Leiterplatte (84) und deren Elektronikkomponenten (90) gewährleistet wird.

8. Verfahren gemäß den Ansprüchen 1 bis 7, **dadurch gekennzeichnet, dass** gemäß Verfahrensschritt c) eine stoffschlüssige Verbindung durch Verklebung der Kammstrukturen (80, 82) mit den UV-vorvernetzten Ebenen (60) mit unvernetztem Dispensermaterial, insbesondere mit Nassschichten (62) erzeugt wird.

9. Verfahren gemäß den Ansprüchen 1 bis 8, **dadurch gekennzeichnet, dass** beim additiven Schichtaufbau (64) im Bodenbereich des Gehäuses (30) Montagehilfen für einzulegende Kammstrukturen (80, 82) und/oder Leiterplatten (84) hergestellt werden.

10. Verfahren gemäß den Ansprüchen 1 bis 9, **dadurch gekennzeichnet, dass** innerhalb der Einspannbereiche (58) Klebstoffwannen (70) erzeugt werden, die eine eine Kerbspannung verringernde Geometrie aufweisen.

11. Verwendung des Verfahrens gemäß einem der vorstehenden Ansprüche zur Herstellung von Gehäusen (30) für energieautarke Sensorsysteme.

## Claims

1. Method for producing a housing (30) of an energy collection device (28) by means of additive manufacture, in particular by means of 3D dispensing, comprising at least the following method steps:
a) producing a layer construction (64) of the housing (30) in a spatial direction (40),
b) creating fixing regions (58) for energy collection structures (56), bending beams (68), comb structures (80, 82) with at least one additional mass (48), separating levels (78) and at least one printed circuit board (84) by additive layer construction while carrying out method step a),
c) materially joining the components, mentioned in method step b), in the fixing regions (58) by arranging the components between UV-precrosslinked levels (60) produced by additive layer construction and wet layers (62) in the layer construction (64).

2. Method according to Claim 1, **characterized in that** cationically polymerizable epoxy resins are processed as construction material.

3. Method according to Claims 1 and 2, **characterized in that** the construction material is dual-crosslinkable, in particular chemically precrosslinked by a UV radiation source (14).

4. Method according to Claims 1 to 3, **characterized in that** thermal total crosslinking is carried out after construction of the entire housing (30).

5. Method according to Claims 1 to 4, **characterized in that** the housing (30) manufactured in the additive layer construction (64) is embodied with defined stiffness and defined damping as a supporting structure.

6. Method according to Claims 1 to 5, **characterized in that** fixing or clamping of the comb structures (80, 82) is ensured in the fixing region (58).

7. Method according to Claims 1 to 6, **characterized in that** thermal insulation of the comb structures (80, 82) and/or the printed circuit board (84) and its electronics components (90) is ensured in the housing (30).

8. Method according to Claims 1 to 7, **characterized in that**, according to method step c), a material bond is created by adhesively bonding the comb structures (80, 82) to the UV-precrosslinked levels (60) with uncrosslinked dispenser material, in particular with wet layers (62).

9. Method according to Claims 1 to 8, **characterized in that** fitting aids for comb structures (80, 82) and/or printed circuit boards (84) to be inserted are produced in the base region of the housing (30) in the additive layer construction (64).

10. Method according to Claims 1 to 9, **characterized in that** adhesive trays (70), which have a geometry that reduces a notch stress, are created within the fixing regions (58).

11. Use of the method according to one of the preceding claims for producing housings (30) for autonomous-energy sensor systems.

## Revendications

1. Procédé de fabrication d'un boîtier (30) d'un dispositif de collecte d'énergie (28) par fabrication additive, en particulier par distribution 3D, comprenant au moins les étapes de procédé suivantes :
a) fabrication d'une structure en couches (64) du boîtier (30) dans une direction spatiale (40),
b) création, par une construction additive de couches lors de la mise en œuvre de l'étape de procédé a), de zones de fixation (58) pour des structures collectrices d'énergie (56), des barres de flexion (68), des structures en peigne (80, 82) avec au moins une masse supplémentaire (48), des niveaux de séparation (78) et au moins une carte à circuit imprimé (84),
c) assemblage par liaison de matière des composants mentionnés dans l'étape de procédé b) dans les zones de fixation (58) en disposant les composants entre des niveaux (60) pré-réticulés par UV et des couches humides (62) fabriqués par construction additive de couches dans la structure en couches (64).

2. Procédé selon la revendication 1, **caractérisé en ce que** des résines époxy polymérisables par voie cationique sont utilisées comme matériau de construction.

3. Procédé selon les revendications 1 et 2, **caractérisé en ce que** le matériau de construction est préréticulé chimiquement, en particulier par une source de rayonnement UV (14), de manière à pouvoir être réticulé de manière duale.

4. Procédé selon les revendications 1 à 3, **caractérisé en ce qu'**après la construction de l'ensemble du boîtier (30), il est procédé à une réticulation thermique globale.

5. Procédé selon les revendications 1 à 4, **caractérisé en ce que** le boîtier (30) fabriqué selon la structure stratifiée additive (64) est réalisé en tant que structure porteuse ayant une rigidité définie et un amortissement défini.

6. Procédé selon les revendications 1 à 5, **caractérisé en ce qu'**un serrage ou un blocage des structures en peigne (80, 82) est assuré dans la zone de fixation (58).

7. Procédé selon les revendications 1 à 6, **caractérisé en ce qu'**une isolation thermique des structures en peigne (80, 82) et/ou de la carte à circuit imprimé (84) et de ses composants électroniques (90) est assurée dans le boîtier (30).

8. Procédé selon les revendications 1 à 7, **caractérisé en ce que**, selon l'étape de procédé c), une liaison par matière est produite par collage des structures en peigne (80, 82) avec les niveaux (60) préréticulés par UV avec un matériau de distribution non réticulé, en particulier avec des couches humides (62).

9. Procédé selon les revendications 1 à 8, **caractérisé en ce que**, lors de la formation additive de couches (64) dans la zone de fond du boîtier (30), des aides au montage sont fabriquées pour des structures en peigne (80, 82) et/ou des cartes à circuit imprimé (84) à insérer.

10. Procédé selon les revendications 1 à 9, **caractérisé en ce que** des réceptacles à colle (70) sont produits à l'intérieur des zones de fixation (58), qui présentent une géométrie réduisant une tension d'entaille.

11. Utilisation du procédé selon l'une des revendications précédentes pour la fabrication de boîtiers (30) pour des systèmes de capteurs autonomes en énergie.
